Europäisches Patentamt

European Patent Office

Office européen des brevets

(11) Veröffentlichungsnummer: **0 216 401**
**A2**

## (12) EUROPÄISCHE PATENTANMELDUNG

(21) Anmeldenummer: 86201301.8

(51) Int. Cl.⁴: **A47J 43/044** , A47J 43/08

(22) Anmeldetag: 23.07.86

(30) Priorität: 01.08.85 DE 8522117 U

(43) Veröffentlichungstag der Anmeldung:
01.04.87 Patentblatt 87/14

(84) Benannte Vertragsstaaten:
**DE FR GB IT SE**

(71) Anmelder: **Philips Patentverwaltung GmbH
Billstrasse 80
D-2000 Hamburg 28(DE) DE**
Anmelder: **N.V. Philips' Gloeilampenfabrieken
Groenewoudseweg 1
NL-5621 BA Eindhoven(NL) FRGBITSE**

(72) Erfinder: **Maeck, Dieter
Islandstrasse 55
D-2000 Hamburg 73(DE)**

(74) Vertreter: **Kupfermann, Fritz-Joachim et al
Philips Patentverwaltung GmbH Billstrasse
80 Postfach 10 51 49
D-2000 Hamburg 28(DE)**

(54) **Küchengerät mit Rührbesen.**

(57) Elektromotorisch angetriebenes Küchengerät, insbesondere Handmixgerät, mit mindestens einem von der Antriebswelle des Motors drehend antreibbaren Rührbesen, der mit seiner Welle kraftschlüssig in eine Steckkupplung der Antriebswelle einsteckbar ist, wobei in dem Antriebswellenzug eine lastabhängig auslösende Kupplung vorgesehen ist und wobei das Auslösedrehmoment der der lastabhängig auslösenden Kupplung einstellbar ist.

EP 0 216 401 A2

## Küchengerät mit Rührbesen

Die Erfindung bezieht sich auf ein elektromotorisch angetriebenes Küchengerät, insbesonders Handmixgerät, mit mindestens einem von der Antriebswelle des Motors drehend antreibbaren Rührbesen, der mit seiner Welle kraftschlüssig in eine Steckkupplung der Antriebswelle einsteckbar ist, wobei in dem Antriebswellenzug eine lastabhängig auslösende Kupplung vorgesehen ist.

Aus der DE-AS 10 08 457 ist eine elektromotorisch angetriebene Misch-und Zerkleinerungsmaschine bekannt, bei der zwischen der Antriebswelle und der das Schlagwerkzeug tragenden Arbeitswelle eine Rutschkupplung vorgesehen ist. Diese dient dazu, bei zu festem Zerkleinerungsgut ein zu starkes Abbremsen bzw. Abwürgen des Motors und damit eine Beschädigung desselben zu verhindern.

Eine ähnliche Maschine ist aus der DE-PS 841 629 bekannt. Auch dort ist in der Antriebswelle zwischen Motor und Schlagwerkzeug eine Rutschkupplung vorgesehen, die ebenfalls dazu dient, .eine Überlastung des Motors zu verhindern.

Beim Rühren von Sahne zu Schlagsahne (bzw. Eiweiß zu Eischnee) kommt es leicht zu einem Ausfallen des Milchfettes in Form von Butter. Dies tritt besonders störend bei bestimmten Witterungsverhältnissen im Sommer auf.

Die Hauptursache liegt jedoch meistens darin, daß Sahne bzw. Eiweiß zu lange mit dem/den Quirl/en gerührt werden, so daß die optimalen Konsistenz-Zeitpunkte überzogen werden.

Es ist Aufgabe der Erfindung, eine Küchenmaschine zu schaffen, bei dem beim Rühren von Sahne ein Ausfallen des Milchfettes in Form von Butter verhindert wird.

Diese Aufgabe ist erfindungsgemäß dadurch gelöst, daß das Auslösedrehmoment der lastabhängig auslösenden Kuplung einstellbar ist.

Eine derartige Küchenmaschine gestattet es, z.B. Sahne automatisch nur so lange zu rühren, bis eine bestimmte Konsistenz erreicht ist, und so ein Ausfallen des Milchfettes der Sahne in Form von Butter zu verhindern. Die Einstellung des Auslösedrehmomentes der lastabhängig auslösenden Kupplung, d. h. des Drehmomentes, ab dem die Kupplung gerade anfängt auszulösen, gestattet es sicherzustellen, daß beim Rühren die Konsistenz der Sahne, bei der das Milchfett anfängt auszufallen, gerade nicht erreicht wird.

Nach weiteren Ausgestaltungen der Erfindung ist vorgesehen, daß die lastabhängig auslösende Kupplung in der Welle des Rührbesens vorgesehen ist oder auf die Welle des Rührbesens aufsteckbar ist.

Bei neuen Konstruktionen wird die lastabhängig auslösende Kupplung bereits im Gerät bzw. bei Handmixern in der Welle des Rührbesens vorgesehen werden. Bei schon vorhandenen Geräten mit einem Rührbesen ohne Kupplung mit einstellbarem Auslösedrehmoment kann eine solche Kupplung als eine Art Steckadapter auf die Welle des Rührbesens angesteckt werden.

Nach weiteren Ausgestaltungen der Erfindung ist vorgesehen, daß die lastabhängig auslösende Kupplung zwei mittels Federkraft gegeneinander preßbare Kupplungsscheiben aufweist, von denen die erste mit dem mit der Steckkupplung zusammenwirkenden Wellenstumpf und die zweite mit dem Wellenteil verbunden ist, der das Rührwerkzeug trägt, und daß die erste Kupplungsscheibe eine plane Reibfläche und die zweite Kupplungsscheibe eine mit hervorstehenden Nocken versehene Reibfläche aufweist.

Eine solche lastabhängig auslösende Kupplung ist einfach im Aufbau und gestattet ein einfaches Reinigen der Reibflächen der Kupplungsscheiben.

Nach weiteren Ausgestaltungen der Erfindung ist vorgesehen, daß die erste Kupplungsscheibe an ihrem Rand mit einem Außengewinde versehen ist, das mit einem Innengewinde an der Innenwand eines topfförmigen Kupplungsgehäuses zusammenwirkt, und daß zwischen dem Boden das Kupplungsgehäuses und der in ihm umlauffähigen zweiten Kupplungsscheibe eine Andruckfeder vorgesehen ist, deren Andruckkraft durch gegenseitiges Verdrehen von erster Kupplungsscheibe und Kupplungsgehäuse einstellbar ist, und daß an der ersten Kupplungsscheibe ein Zeiger vorgesehen ist, der einer am Kupplungsgehäuse angebrachten Skala gegenübersteht.

Eine Einstellung des Auslösedrehmomentes der lastabhängig auslösenden Kupplung ist durch Verdrehen des Kupplungsgehäuses gegenüber der ersten, über einen Wellenstumpf mit der Steckkupplung zusammenwirkenden Kupplungsscheibe möglich, wobei die am Kupplungsgehäuse angebrachte Skala eine Orientierung für die Einstellung des Auslösedrehmomentes der lastabhängig auslösenden Kupplung bietet.

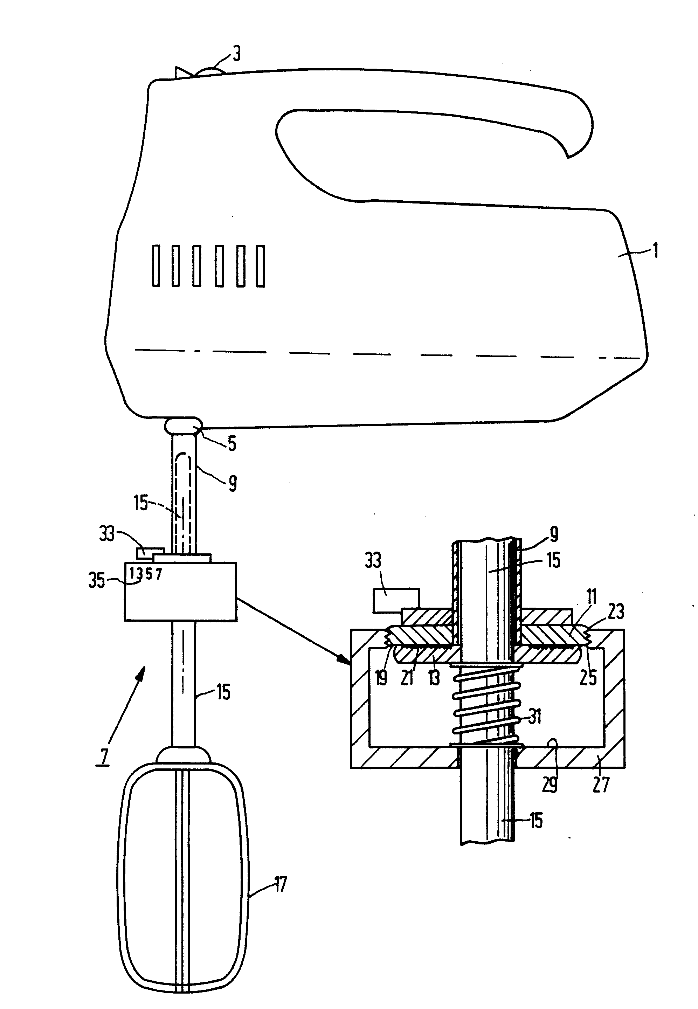

Ein Ausführungsbeispiel der Erfindung wird anhand der Zeichnung näher erläutert, in der ein Handmixgerät in Seitenansicht umd zum Teil im Schnitt dargestellt ist.

In der Zeichnung . ist ein bekanntes, elektromotorisch betriebenes Handmixgerät 1 für Haushaltszwecke dargestellt. Zum Ein-und Ausschalten und zur Wahl verschiedener Geschwindigkeiten des Elektromotors dient ein im Bereich seines Griffes angeordneter elektrischer Schalter 3. An seiner Unterseite weist das Handmixgerät 1 eine Steckkupplung 5 auf, in die Rührwerkzeuge mit einer Welle kraftschlüssig einsteckbar sind.

In der Zeichnung ist ein Rührwerkzeug 7 mit einem hohl ausgebildeten Wellenstumpf 9 in die Steckkupplung eingesteckt und mit dieser kraftschlüssig verbunden. Der Wellenstumpf 9 ist mit einer ersten Kupplungsscheibe 11 verbunden. Koaxial zu der ersten läuft eine zweite Kupplungsscheibe 13 um, die mit dem Wellenteil 15 verbunden ist. Der Wellenteil 15 ist mit dem Rührwerkzeug 17 verbunden und oberhalb der Kupplungsscheiben 11, 13 innerhalb des Wellenstumpfes 9 geführt.

Die erste Kupplungsscheibe 11 hat eine plane Reibfläche 19, während die Reibfläche 21 der zweiten Kupplungsscheibe 13 hervorstehende Nocken aufweist. Die erste Kupplungsscheibe 11 ist an ihrem Rand mit einem Außengewinde 23 versehen, das mit einem Innengewinde 25 an der Innenwand eines topfförmigen Gehäuses 27 zusammenwirkt. Zwischen einem Boden 29 des topfförmigen Gehäuses 27 und der in ihm umlauffähigen zweiten Kupplungsscheibe 13 ist eine Feder 31 vorgesehen.

Zur Einstellung des Auslösedrehmomentes der lastabhängig auslösenden Kupplung wird das Gehäuse 27 gegenüber der ersten Kupplungsscheibe 11 verdreht. Infolge der dadurch entstehenden Lageveränderung zwischen den Kupplungsscheiben 11 und 13 einerseits und dem Kupplungsgehäuse 27 andererseits ändert sich auch die Kraft, die die Feder 31 auf die zweite Kupplungsscheibe 13 ausübt, und damit auch das Auslösedrehmoment der Kupplungsscheiben 11 und 13.

An der ersten Kuplungsscheibe 11 ist ein Zeiger 33 angebracht, der einer Skala 35 am Gehäuse 27 der Kupplung gegenübersteht. Dies ermöglicht eine Orientierung für die Einstellung der lastabhängig auslösenden Kupplung.

Wird beim Schlagen von Sahne oder Eiweiß zu Eischnee das eingestellte Auslösedrehmoment überschritten, drehen die Kupplungsscheiben gegeneinander durch. Die erste Kupplungsscheibe 11 dreht sich weiterhin mit den Antriebsdrehzahl, während die zweite Kupplungsscheibe 13 ebenso wie das mit ihr über den Wellenteil 15 verbundene Rührwerkzeug 17 langsamer läuft und gegebenenfalls zum Stillstand kommt.

Außer mechanisch arbeitenden Kupplungen, die ab einem einstellbaren Auslösedrehmoment auslösen, sind auch elektronische Lösung möglich, z.B. in Form einer Überwachung des Motorstromes und Abschalten des Motors bei Überschreiten eines einstellbaren Grenzwertes des Stroms.

## Ansprüche

1. Elektromotorisch angetriebenes Küchengerät, insbesonders Handmixgerät, mit mindestens einem von der Antriebswelle des Motors drehend antreibbaren Rührbesen (7), der mit seiner Welle (9) kraftschlüssig in eine Steckkupplung (5) der Antriebswelle einsteckbar ist, wobei in dem Antriebswellenzug eine lastabhängig auslösende Kupplung vorgesehen ist, dadurch gekennzeichnet, daß das Auslösedrehmoment der der lastabhängig auslösenden Kupplung einstellbar ist.

2. Elektromotorisch angetriebenes Küchengerät nach Anspruch 1, dadurch gekennzeichnet, daß die lastabhängig auslösende Kupplung in der Welle (9, 25) des Rührbesens (7) vorgesehen ist.

3. Elektromotorisch angetriebenes Küchengerät nach Anspruch 1, dadurch gekennzeichnet, daß die lastabhängig auslösende Kupplung auf die Welle (9) des Rührbesens aufsteckbar ist.

4. Elektromotorisch angetriebenes Küchengerät nach einem oder mehreren der Ansprüche 1 bis 3, dadurch gekennzeichnet, daß die erste Kupplungsscheibe (11) eine plane Reibfläche (19) und die zweite Kupplungsscheibe (13) eine mit Nocken versehene Reibfläche (21) aufweist.

5. Elektromotorisch angetriebenes Küchengerät nach einem oder mehreren der Ansprüche 1 bis 4, dadurch gekennzeichnet, daß die erste Kupplungsscheibe (11) an ihrem Rand miteinem Außengewinde (23) versehen ist, das mit einem Innengewinde (25) an der Innenwand eines topfförmigen Kupplungsgehäuses (27) zusammenwirkt, und daß zwischen dem Boden (29) des Kupplungsgehäuses (27) und der in ihm umlauffähigen zweiten Kupplungsscheibe (13) eine Andruckfeder (31) vorgesehen ist, deren Andruckkraft durch gegenseitiges Verdrehen von erster Kupplungsscheibe (11) und Kupplungsgehäuse (27) einstellbar ist.

6. Elektromotorisch angetriebenes Küchengerät nach einem oder mehreren der Ansprüche 1 bis 5, dadurch gekennzeichnet, daß der Wellenstumpf (9) im Bereich der ersten Kupplungsscheibe (11) hohl ausgebildet ist und daß in dem Hohlraum ein Führungsansatz des mit dem Arbeitswerkzeug (17) verbundenen Wellenteils (15) eingreift.

7. Elektromotorisch angetriebenes Küchengerät nach einem oder mehreren der Ansprüche 1 bis 6, dadurch gekennzeichnet, daß an der ersten Kupplungsscheibe (11) ein Zeiger (33) vorgesehen ist, der einer am Kupplungsgehäuse (27) angebrachten Skala (35) gegenübersteht.